# EUROPEAN PATENT SPECIFICATION

(11) **EP 3 835 269 B1**
(45) Date of publication and mention of the grant of the patent: **13.10.2021**
(21) Application number: 19215288.2
(22) Date of filing: 11.12.2019
(51) Int. Cl.: C03B 1/02, C03C 1/00

(54) **METHOD AND DEVICE FOR PREPARING A BATCH TO FEED INTO A GLASS MELTING FURNACE**
VERFAHREN UND VORRICHTUNG ZUR VORBEREITUNG EINES GEMENGES ZUM EINBRINGEN IN EINEN GLASSCHMELZOFEN
PROCÉDÉ ET DISPOSITIF POUR LA PRÉPARATION D'UN LOT POUR ALIMENTER UN FOUR DE FUSION DE VERRE

(43) Date of publication of application: 16.06.2021
(73) Proprietor: International Partners in Glass Research (IPGR) e.V., 52070 Aachen (DE)
(72) Inventor: Güçlü, Fatih Mehmet, 52074 Aachen (DE); Roos, Christian, 65388 Schlangenbad (DE)
(74) Representative: Bauer, Dirk

(56) References cited:
- EP-A2- 3 147 264

## Description

### Preamble

The present invention relates to a method for preparing a batch comprising multiple components to feed into a glass melting furnace containing a glass melt which forms surrounding volume and a top surface.

Further, the invention relates to a device for preparing a batch to feed into a glass melting furnace according to the preamble of claim 7.

Further the invention relates to a batch preparation suitable to feed into a glass melting furnace according to the preamble of claim 9.

### State of the art

Glass melting furnaces are commonly known in the state of the art. Typically, glass furnaces can be grouped according to the location of the energy source (U flame or cross fired furnaces), depending on the type of the oxidant (oxygen or air) and also depending on the quality of the produced glass such as container, tableware, float or fiberglass. The present invention concerns all types of glass melting furnaces mentioned before.

Since the production of glass in a glass melting furnace runs continuously, raw loose batch material is regularly added to the glass melt in the melt chamber, whereas good quality glass is continuously pulled from the furnace for the production. In conventional furnaces the raw batch material, also named as batch, is added to the furnace in powder form by distributing the same on top of the existing glass melt, burners being arranged above the glass melt. This method has many drawbacks, for example the well known insulating effect of the batch material on top of the melt, which results in a higher energy consumption. Further, the introduction of the batch material causes an undesired dusting effect and a lot of air is introduced in the melt, which causes unwanted bubbles in the melt requiring a long mixing process.

To solve the aforesaid problems, the document US 9,394,192 B2 proposes to introduce the batch below the melt level, which can be called "submerged feeding", so that the disadvantages about an insulating layer on top of the melt, if the batch is introduced on top of the glass melt, are partially avoided. However, the introduction of air is not prevented with this method. Also, the batch material tends to flow up to the top of the melt so that a part of the batch material again acts as a barrier as regards the heat emitted by the burners.

Consequently, in this document the effective mixing is not addressed and process between the batch material and the glass melt remains difficult and time consuming.

EP3147264 A2 discloses a method and a device for forming a glass batch rod whereby the batch is pressed and twisted into the shape of a rod by passing the material in between several rollers and conveyor belts.

### Problem

The problem to be solved with the present invention is to develop a method for preparing a batch to feed into a glass melting furnace in such a way that a mixing of the glass melt and the raw material is optimized and energy-saving.

### Solution

Based on the state of the art mentioned above, the aforesaid problem is solved in the way that batch components are poured on a flexible conveyor belt in at least two layers that are arranged one upon another, wherein a base layer which is in contact with the conveyor belt has a wider width measured in horizontal direction and perpendicular to the direction of travel of the conveyor belt than a top layer and wherein the conveyor belt is bent around an axis parallel to the direction of travel of the conveyor belt, the axis being positioned above a surface of the conveyor belt which surface is in contact with the batch layers so as to form a rod with an approximately circular or oval cross section of the formally flat layers, wherein the former base layer forms an outer sheath layer of the rod's cross section.

With this inventive method it is possible to prepare the batch rod in an endless manner or to prepare batch rod sections at intervals. Further, it is possible to compose the batch individually according to changing conditions of the manufacturing process of the glass. In other words, it is easily possible to change the components of the rod as well the thickness of the layers and consequently the quantity of a certain component.

An additional advantage of the present invention is that it is possible to add corrosive materials to the batch without risk of any damage of parts of the furnace, if the corrosive material is added as a second or further layer. According to the invention the layers are bent to a rod so that all layers above the base layer are surrounded by the base layer and consequently the corrosive material does not come into contact with parts of the furnace on the one hand and on the second hand the corrosive material is protected from the atmosphere.

The conveyor belt is bent and the center point of the bent radius is above the layers. The process of bending the belt should occur continuously over a predetermined distance, as a sudden change of shape of the belt would mix up the different layers. The bending of the belt could occur by moving the long sides of the belt towards each other until they touch each other at the end of the predetermined distance, so that a round cross section of the belt is created. Typically, the bent belt is created by rollers arranged in an appropriate way. Such rollers are known in the state of the art. The forming means serves to change the shape of the batch from the flat layers to the concentric layers forming a rod.

The batch prepared with the inventive method can be fed classically from the top into the melt or by submerged feeding through an orifice that is positioned below the level of the glass melt top surface.

According to a preferred embodiment of the invention the approximately cylindrical rod is compacted by pressure applying in radial direction on the bent belt to compact the layers in order to minimize trapped air in the rod, especially, compared to loose batch in conventional batch feeding. As the batch is introduced to the melt with a minimum of air almost no bubbles occur in the melt. By applying the pressure the initial diameter of the rod is reduced between 0,1% and 15%. One possibility to apply the pressure to the batch is to bent the belt at an end portion in such a way that the diameter of the round cross section is reduced compared to a diameter of the aforementioned round shape of the belt, with the long sides touching each other. In other words: to apply the pressure the belt can be bent in a way that there is an overlap of the long sides of the belt in margin areas.

Advantageously, it is foreseen that a first layer composed of calcium oxide is poured on the conveyor belt and a final layer composed of coarse cullet is poured on the conveyor belt. Consequently, after bending the conveyor belt to form a rod of the batch the first layer composed of calcium oxide becomes the outer sheath layer of the rod. Calcium oxide is a component which is suitable as outer sheath layer of the rod, because it is not corrosive. Calcium oxide enhances the chemical resistance and the hardness of the glass to be produced.

Coarse cullet, which has a grain size between 3 mm and 10 mm according to the present application, is suitable as the innermost layer of the rod, because it melts faster than other components. Therefore, it will soften and becomes viscous so that energy is released inside the rod. If electrodes are arranged in the melting chamber of the furnace a supplemental mixing effect occurs because of present Na+ ions in the coarse cullet that want to follow the electrical path described before. Additionally, the rod will be separated into particles, which is good for the mixing process.

According to a preferred embodiment of the inventive method a component of the batch is selected from at least one of the group comprising
a. Sodium hydroxide
b. Silicon dioxide
c. Calcium oxide
d. Magnesium oxide
e. Cullet, especially coarse and/or fine cullet.

Sodium hydroxide is a component that can replace sodium carbonate of the common glass production, because sodium hydroxide also reduces the melting point of the batch. Further, sodium hydroxide has the advantage that it gives a good electric conductivity to the batch introduces into the furnace. In furnaces in which electrodes are arranged in the melting chamber to create a flow in the melt the electric conductivity of the sodium oxide has the advantage that it follows a path given by the electrodes the path having a horizontal component of movement. Consequently, if the batch is fed through an orifice that is positioned below the level of the glass melt top surface, the batch material does not float up to the top surface of the melt, but remains within the melt in an area below the top surface. The raw material cannot take the short (vertical) way to the surface, but is urged to flow along an extended path through the melt in comparison with common furnaces without electrodes arranged in the melting chamber. The raw material is routed through the melt by means forces created within the material by the electrical field caused by the electrodes in combination with the sodium oxide. Therefore, the batch material is completely surrounded by hot melt for a much longer time so that the raw material itself is optimally heated and melts much faster than usual. Advantageously, if the flow moves approximately in a horizontal plane an optimal mixing between the batch material and the melt is caused. Consequently, the top surface of the melt is kept free from unmolten raw material so that the heat transfer from the hot burner flames to the melt is improved due to the increased thermal conductivity on the surface.

As sodium hydroxide is very corrosive, especially when contacting metal, it has to be located as an inner layer, where a contact to parts of the furnace is prevented.

Silicon dioxide is the main component of glass which creates the network in the glass structure and gives the properties of glass.

Magnesium oxide enhances the chemical resistance and the hardness of the glass to be produced as calcium oxide does. Further, magnesium oxide decreases the viscosity of the batch and increases the electrical conductivity of the molten glass. This is advantageous if electrodes are arranged in the melting chamber.

Fine and coarse cullet is very useful in the batch because it saves raw material and energy costs as it has a low melting point. So, cullet material can be used as innermost layer as well as layer to encapsulate or separate other components from each other. According to the present application the grain size for fine cullet is in a range of 0,1 mm to 7 mm.

According to a further preferred embodiment of the invention six layers are formed the base layer being calcium oxide, the second layer being magnesium oxide, the third layer being fine cullet, the fourth layer being sodium hydroxide, the fifth layer being silicon dioxide, the sixth layer being coarse cullet. With this combination of materials and the inventive order of the layers the advantages of the materials work together. As sodium hydroxide is covered by other layers it does not contact parts of the furnace and cannot damage the furnace. Further, the inventive arrangement of the components of the batch results in an optimal mixing process of the batch with the melt, especially when the batch is fed by submerged feeding and when electrodes are arranged in the melting area. In the end the inventive method safes energy costs.

According to a particularly advantageous embodiment of the inventive method the width of each layer decreases beginning with the base layer to the top layer, steps being formed along a longitudinal side of the layers viewed in the direction of travel of the conveyor belt. So, the bending process is optimized to have an approximately circular or oval cross section.

The problem mentioned above is further solved by a device for preparing a batch comprising multiple components to feed into a glass melting furnace containing a glass melt which forms a top surface, the device being characterized by
- a flexible conveyor belt with a direction of travel,
- at least two loading units arranged above the flexible conveyor belt each loading unit containing a batch component and each loading unit having an outlet leading to an upper surface of the conveyor belt each in order to pour a layer of a batch component, the layers being arranged one upon another, wherein each layer corresponds to one loading unit, the outlets of the loading units having an outlet cross section wherein a width of the outlet cross section measured in horizontal direction and perpendicular to the direction of travel decreases from a first loading unit corresponding to a base layer which is in contact with the conveyor belt is wider than the width of the outlet cross section of the loading unit corresponding to a top layer,
- forming means to bend the conveyor belt around an axis parallel to the direction of travel of the conveyor belt, the axis being positioned above a surface of the conveyor belt which surface is in contact with the batch layers so as to form a rod with an approximately circular or oval cross section of the former flat layers, wherein the former base layer forms an outer sheath layer of the rod.

With this inventive device it is very easy to carry out the inventive method described before.

As loading means different elements are possible, for example pipe lines or similar. Further, containers could be used as loading means, which have an outlet leading to the upper surface of the conveyor belt.

For example, it is possible to arrange six loading units behind each other in a direction of the direction of travel of the conveyor belt, a width of the outlets of the loading units viewed in a horizontal direction perpendicular to the direction of travel decreasing beginning with a first loading unit containing a first component to a sixth loading unit containing a sixth component.

Of course, it is possible to arrange a different number of loading means, from which the desired components of the batch are poured on the conveyor belt, for example three, four, five, seven or more loading units.

As forming means to bend the conveyor belt rollers could be arranged in an appropriate way, for example, as described above.

According to an advantageous design of the inventive device compaction means are arranged that apply pressure on the bent belt in radial direction in order to compact the layers. With the compaction means the amount of trapped air in the batch is minimized, which causes the positive effect that a minimum of bubbles occur during the melting process. If the forming means are formed by rollers that are arranged in a way that they give a circular shape of the conveyor belt, also the compaction means could be formed by the rollers, that are arranged in such a way that the diameter of the belt's cross section is smaller than the diameter of the cross section of the batch material on the belt, respectively in the belt. If the pressure is applied in the aforesaid way, the compacting means are formed by the forming means, respectively by some of the forming means, namely some rollers.

Additionally, the problem mentioned above is solved by a batch comprising multiple components for feeding into a glass melting furnace containing a glass melt which forms a top surface, wherein the batch is formed as rod with an approximately circular or oval cross section with at least two layers being approximately concentric to each other. The inventive batch has the analogous advantages described above in connection with the inventive method and device. It is evident that batch rod can be create as endless rod as well as rod sections with a small length of 40 cm to 100 cm or other lengths.

Advantageously, it is foreseen that the batch contains a layer composed of sodium hydroxide. As mentioned above sodium hydroxide is a component to replace sodium carbonate of the common glass production, because sodium hydroxide also reduces the melting energy of the batch as sodium carbonate. Further, sodium hydroxide has the advantage that the chemical reaction to calcinate the sodium carbonate is not necessary which reduces the production of CO2 in the melt. So, use of sodium hydroxide reduces the energy requirement of batch melting and also reduces the formation of CO2 in the glass melt.

According to a preferable design of the inventive batch an outermost layer is composed of calcium oxide and an innermost layer is composed of coarse cullet. The resulting advantages have already been described above in connection with inventive method and device.

In accordance with a further preferred embodiment of the inventive batch at least one inner layer is arranged between the outermost layer and the innermost layer, the layer being composed of sodium hydroxide, silicon dioxide, magnesium oxide or fine cullet.

A particularly advantageous design of the inventive batch has six layers the first outer layer being composed of calcium oxide, the second layer being composed of magnesium oxide, the third layer being composed of fine cullet, the fourth layer being composed of sodium hydroxide, the sixth inner layer being composed of coarse cullet.

It is evident that it is also possible to arrange another amount of different layers to form the inventive rod as well as another order of the layers.

### Description of the drawings:

The present invention is illustrated with reference to the appended figures, in which
- Figure 1 shows:: a three-dimensional view of an inventive device for preparing a batch to feed into a glass melting furnace,
- Figure 2 shows:: a vertical section through the six layers of the batch of figure 1 and
- Figure 3 shows:: a vertical section through the rod of figure 1 and
- Figures 4a to 4f show:: different cross sections of the bent belt in the area of the forming means.

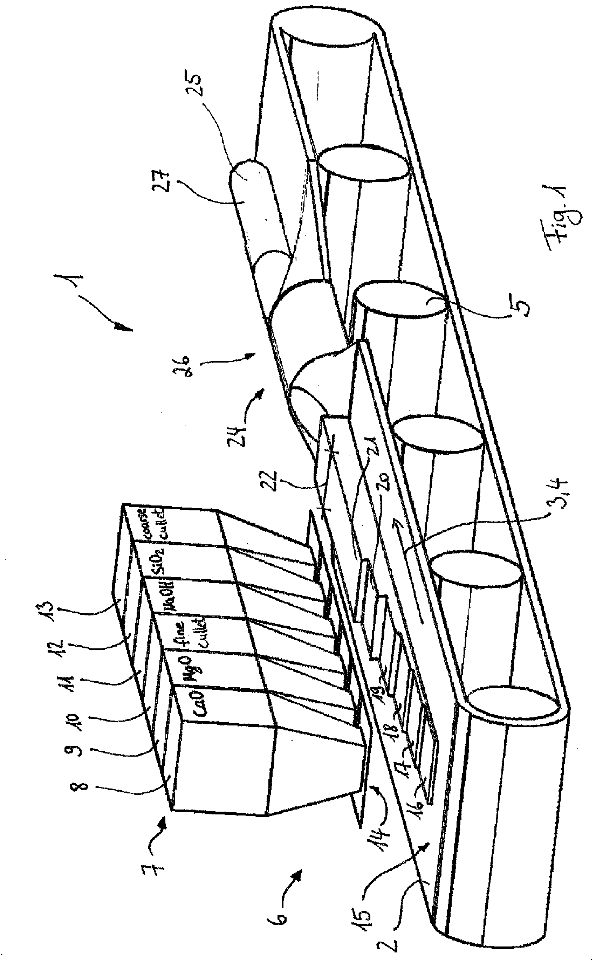

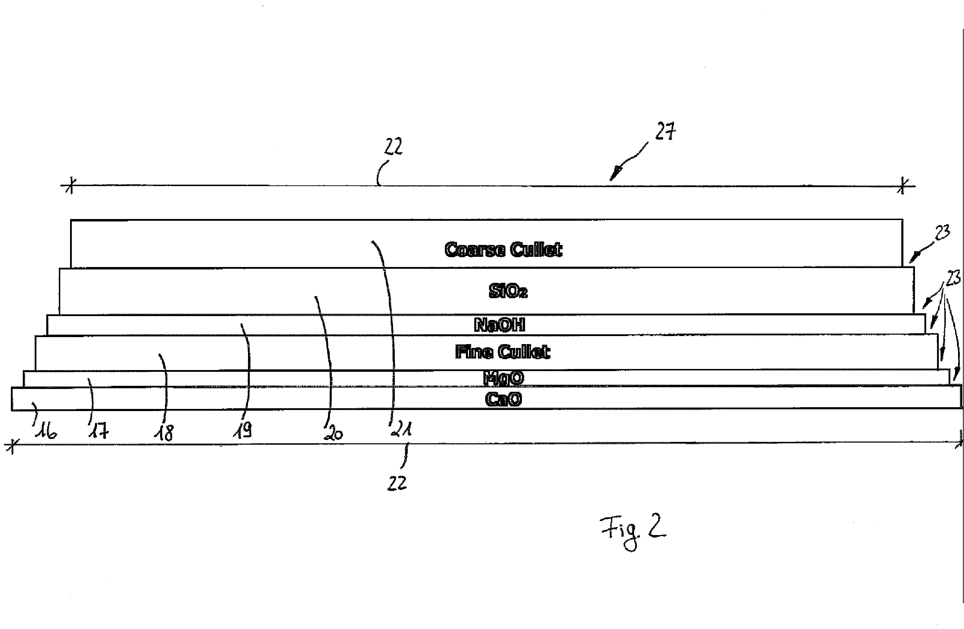

Figure 1 shows an example for an embodiment of an inventive device 1 for preparing a batch 27 to feed into a glass melting furnace in a three-dimensional view, the furnace not being shown in the figure. The inventive device 1 comprises a flexible conveyor belt 2 with a direction 3 of travel parallel to a longitudinal direction 4 of the conveyor belt 2. As commonly known the conveyor belt 2 is driven by rollers 5. In an area 6 at the beginning of the conveyor belt 2 and viewed in longitudinal direction 4 of the conveyor belt 2 six loading units 7 with batch components are located one after the other. The loading units 7 are formed as containers a first container 8 containing calcium oxide, a second container 9 containing magnesium oxide, a third container 10 containing fine cullet, a fourth container 11 containing sodium hydroxide, a fifth container 12 containing silicon dioxide and a sixth container 13 containing coarse cullet. Each container 8 to 13 has an outlet 14 leading to an upper surface 15 of the conveyor belt 2 so that the different components mentioned before are poured on the flexible conveyor belt 2 and six flat layers 16 to 21 are formed under the sixth container 13. For the sake of simplicity, the layers 16 to 21 shown in figure 1 have all the same width 22 ― measured in horizontal direction perpendicular to the direction of travel. In reality the width 22 of the layers 16 to 21 decreases from the first layer 16, which is in contact with the conveyor belt 2 and forms a base layer, to the sixth layer 21, which is the top layer. Along longitudinal edges of the layers 16 to 21 steps 23 are formed, what is shown in figure 2, in which a vertical section of the six layers 16 to 21 is shown. The arrangement of a different width 22 of the different layers 16 to 21 is done by corresponding outlet 14 cross-sections of the containers 8 to 14. In other words, the width 22 of the outlet 14 cross-sections is decreasing from the first container 8 to the sixth container 21. The length and width difference for each layer can be between 5 mm to 25 mm depending on the height of the layer which is defined by the batch composition.

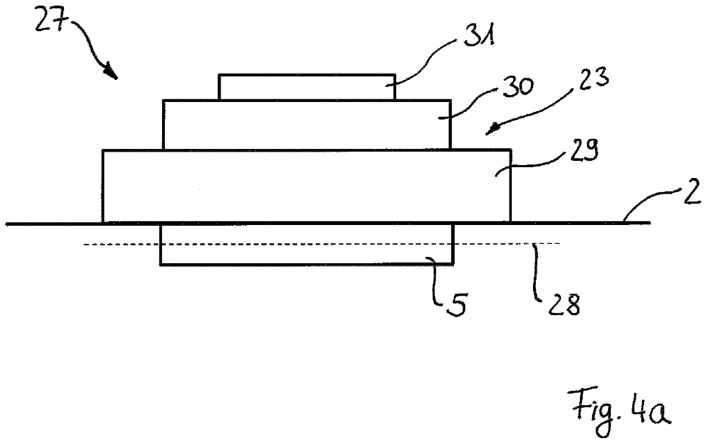

In a middle part of the conveyor belt 2 forming means 24, which are not shown explicitly in figure 1 but which will be described in detail in figures 4a to 4f, are arranged that bend the conveyor belt 2 into a cylindrical shape so that a rod 25 is formed. The conveyor belt 2 is bent continuously by arranging appropriate rollers not shown in the figure 1 to bend the batch from the flat shape of the layers 16 to 21 into the cylindrical shape. Consequently, the six layers 16 to 21 positioned flat on the conveyor belt 2 are bent according to the conveyor belt 2 in the middle part and the formal flat layers 16 to 21 turn into a circular shape with layers 16 to 21 that are concentric to each other. Altogether, a cylindrical rod 25 is created, which can be introduced in the furnace via an orifice below a level of a glass melt top surface. Of course, it is possible to introduce the rod 25 into the furnace in a conventional manner by putting the same on top of the existing glass melt. So, the base layer (first layer 16) composed of the calcium oxide forms an outer sheath layer 16 of the rod's 25 cross section and the upper layer 21 becomes an innermost layer 21 of the rod 25.

With the inventive device and method it is possible to create an endless rod as well as rod pieces with individual lenghts.

Further to the forming means 24 the inventive device 1 has compaction means 26 also located in the middle part of the conveyor belt 2, the compaction means 26 compacting the layers 16 to 21 in order to minimize trapped air. This is advantageous for the mixing process of the glass melt because unfavorable bubbles are avoided. The compacting means 26 are not explicitly shown in figure 1 but in figures 4a to 4f.

Figure 1 also provides a good illustration of a preferred execution of the inventive method for preparing a batch 27 to feed into a glass melting furnace:
Firstly, the batch components are poured on the flexible conveyor belt 2 in six layers 16 to 21, the layers 16 to 21 being arranged one upon another, wherein the first layer 16 (base layer) which is in contact with the conveyor belt 2 has a wider width 22 measured in horizontal direction and perpendicular to the direction 3 of travel of the conveyor belt 2 than the top layer.

Then, the conveyor belt 2 is bent around an axis parallel to the direction 3 of travel of the conveyor belt 2, the axis being positioned above an upper surface 15 of the conveyor belt 2 which surface 15 is in contact with the batch layers 16 to 21 so as to form a rod with an approximately circular or oval cross section of the formally flat layers 16 to 21, wherein the former base layer 16 forms an outer sheath layer 16 of the rod 25.

Subsequently, the rod 25 can be fed into the glass melt of the furnace, advantageously through an orifice that is positioned below the level of the glass melt top surface, the furnace as well as the orifice not being shown in the figure 1.

Figure 2 shows a vertical section through the six layers 16 to 21 of figure 1. An optimal composition of the batch 27 is reached, when the first layer 16 has a thickness in a range of 10 mm to 40 mm, advantageously in a range of 20 mm to 30 mm, the second layer 17 has a thickness in a range of 1 mm to 10 mm, advantageously in a range of 2 mm to 8 mm, the third layer 18 has a thickness in a range of 110 mm to 190 mm advantageously in a range of 130 mm to 170 mm, the fourth layer 19 has a thickness in a range of 35 mm to 80 mm, advantageously in a range of 45 mm to 65 mm, the fifth layer 20 has a thickness in a range of 180 mm to 320 mm, advantageously in a range of 200 mm to 300 mm, and the sixth layer 21 has a thickness in a range of 120 mm to 200 mm, advantageously in a range of 140 mm to 180 mm.

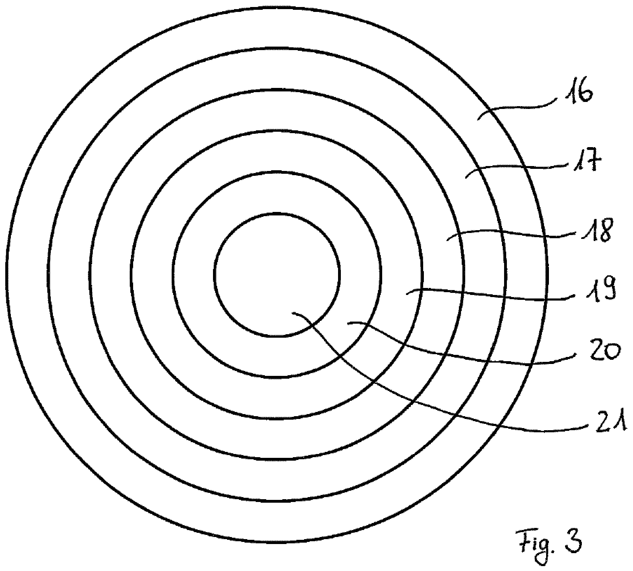

Figure 3 shows a vertical section through the inventive batch rod according to figure 1, where the different layers 16 to 21 arranged concentric to each other can be seen. For the sake of simplicity the thickness of the different layers are the same. In reality, the thickness of the different layers 16 to 21 is as mentioned before or can vary according to an individual recipe of the batch.

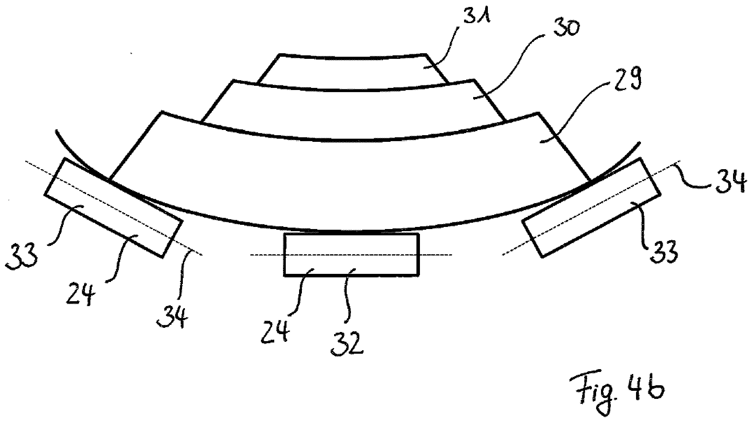

Figures 4a to 4f each shows a cross section of the flexible conveyor belt 2, the different figures showing a different stage of the bending process. In figure 4a the belt 2 is driven by one single roller 5 with a horizontal axis of rotation 28, wherein the belt 2 is in a flat position. For the sake of ease the batch 27 shown in figure 4a consists of three layers 29, 30, 31 with different thickness and different width. In figure 4b the belt 2 is slightly bent by arranging three rollers 32, 33 with a shorter length than the roller 5, a middle roller 32 being orientated horizontally and the outer rollers 33 having an axis of rotation 34 angled to the horizontal so that the belt 2 as well as the layers 29, 30, 31 are bent too.

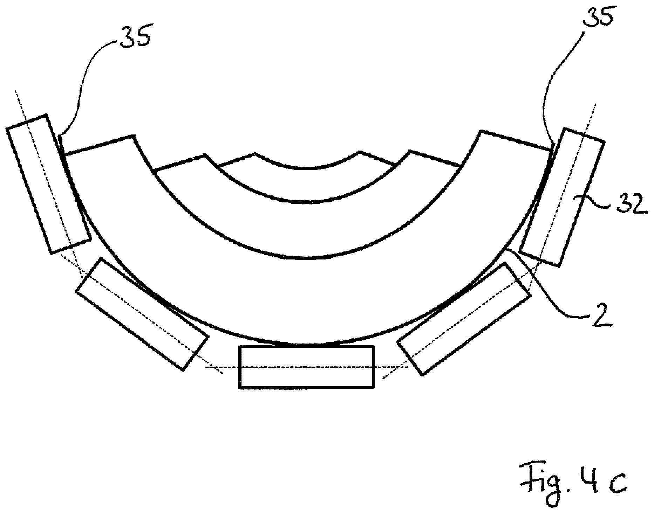

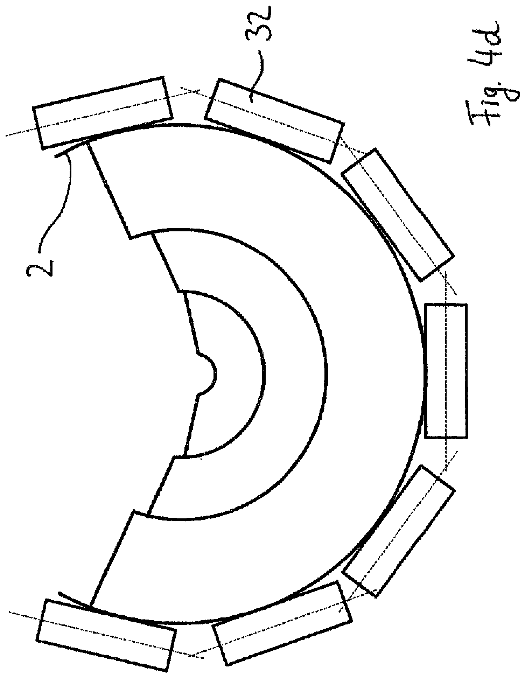

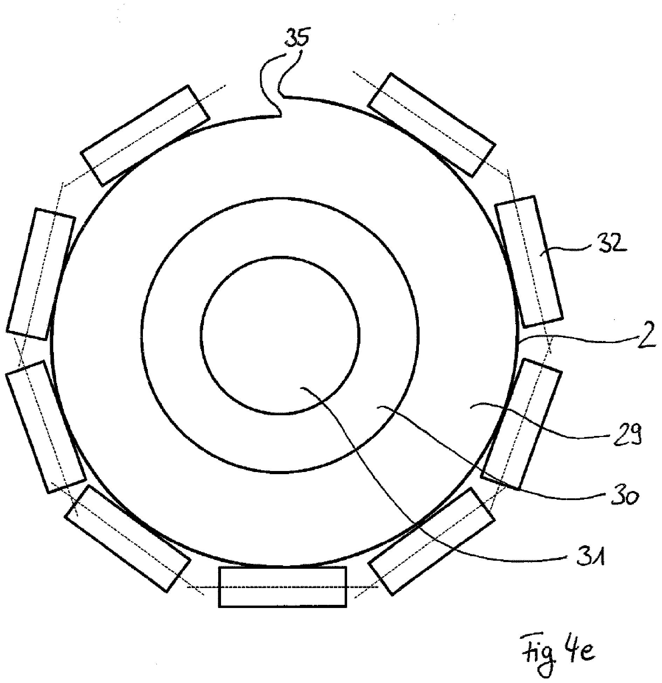

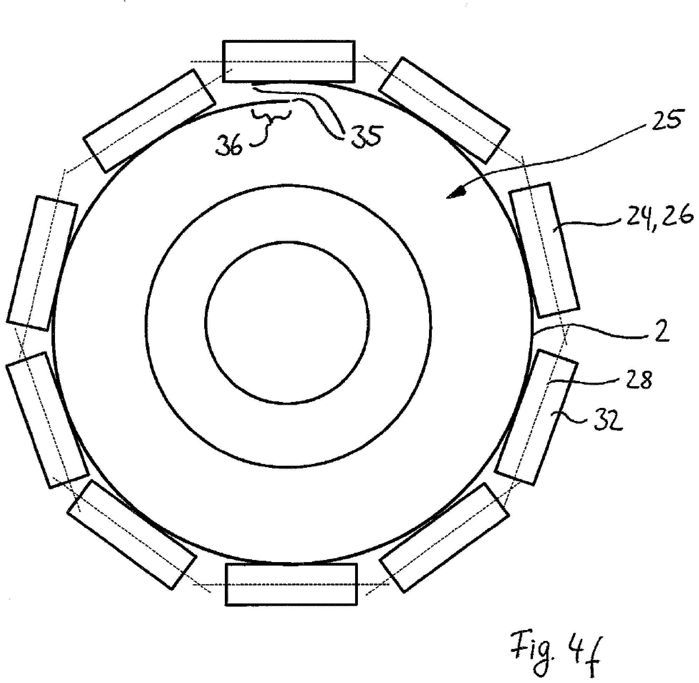

In the figures 4c to 4f the amount of rollers 32 increases with the degree of belt bending, namely five rollers 32 in figure 4c, seven rollers 32 in figure 4d, nine rollers 32 in figure 4e and ten rollers 32 in figure 4f, wherein the belt 2 is bent to a complete circle in figure 4e so that the long sides 35 of the belt are next to each other. The axis of rotation of the rollers 32 each is inclined accordingly. Consequently, the layers 29, 30, 31 are bent too and a rod 25 of the batch 27 components is created. The layers 29, 30, 31 are arranged concentrically to each other in figures 4e and 4f. In order to compact the batch 27 the belt 2 is further bent to decrease the diameter of rod 25, which is shown in figure 4f. The long sides 35 of the belt overlap each other in margin areas 36. Consequently, the rollers shown in figure 4f serve as forming means 24 as well as compacting means 26.

### Reference numerals:

- 1: device
- 2: conveyor belt
- 3: direction of travel
- 4: longitudinal direction of the belt
- 5: roller
- 6: area at the beginning
- 7: loading unit
- 8: first container
- 9: second container
- 10: third container
- 11: fourth container
- 12: fifth container
- 13: sixth container
- 14: outlet
- 15: upper surface
- 16 to 21: layer
- 22: width
- 23: step
- 24: forming means
- 25: rod
- 26: compaction means
- 27: batch
- 28: axis of rotation
- 29 to 31: layer
- 32, 33: roller
- 34: axis of rotation
- 35: long side
- 36: margin area

## Claims

1. Method for preparing a batch (27) comprising multiple components to feed into a glass melting furnace containing a glass melt which forms surrounding volume and a top surface, **characterized in that** batch (27) components are poured on a flexible conveyor belt (2) in at least two layers (16, 17, 18, 19, 20, 21, 29, 30, 31) that are arranged one upon another, wherein a base layer which is in contact with the conveyor belt (2) has a wider width (22) measured in horizontal direction and perpendicular to the direction (3) of travel of the conveyor belt (2) than a top layer and wherein the conveyor belt (2) is bent around an axis parallel to the direction (3) of travel of the conveyor belt (2), the axis being positioned above a surface of the conveyor belt (2) which surface is in contact with the batch (27) layers (16, 17, 18, 19, 20, 21, 29, 30, 31) so as to form a rod (25) with an approximately circular or oval cross section of the formally flat layers (16, 17, 18, 19, 20, 21, 29, 30, 31), wherein the former base layer forms an outer sheath layer of the rod's (25) cross section.

2. Method according to claim 1, **characterized in that** the approximately cylindrical rod (25) is compacted by pressure applying in radial direction on the bent belt (2) to compact the layers (16, 17, 18, 19, 20, 21, 29, 30, 31).

3. Method according to claim 1 or 2, **characterized in that** a first layer (16) composed of calcium oxide is poured on the conveyor belt (2) and a final layer composed of coarse cullet is poured on the conveyor belt (2).

4. Method according to one of claims 1 to 3, **characterized in that** a component of the batch (27) is selected from at least one of the group comprising
a. Sodium hydroxide
b. Silicon dioxide
c. Calcium oxide
d. Magnesium oxide
e. Cullet, especially coarse and/or fine cullet.

5. Method according to one of claims 1 to 4, **characterized in that** six layers (16, 17, 18, 19, 20, 21) are formed, the base layer (16) being calcium oxide, the second layer (17) being magnesium oxide, the third layer (18) being fine cullet, the fourth layer (19) being sodium hydroxide, the fifth layer (20) being silicon dioxide, the sixth layer (21) being coarse cullet.

6. Method according to claim 5, **characterized in that** the width (22) of each layer (16, 17, 18, 19, 20, 21) decreases beginning with the base layer (16) to the top layer (21), steps (23) being formed along a longitudinal side of the layers (16, 17, 18, 19, 20, 21) viewed in the direction (3) of travel of the conveyor belt (2).

7. Device (1) for preparing a batch (27) comprising multiple components to feed into a glass melting furnace containing a glass melt which forms a top surface, the device (1) being **characterized by**
- a flexible conveyor belt (2) with a direction (3) of travel,
- at least two loading units (7) arranged above the flexible conveyor belt (2) each loading unit (7) containing a batch (27) component and each loading unit (7) having an outlet (14) leading to an upper surface (15) of the conveyor belt (2) each in order to pour a layer (16, 17, 18, 19, 20, 21, 29, 30, 31) of a batch (27) component, the layers (16, 17, 18, 19, 20, 21, 29, 30, 31) being arranged one upon another, wherein each layer (16, 17, 18, 19, 20, 21, 29, 30, 31) corresponds to one loading unit (7), the outlets (14) of the loading units (7) having an outlet (14) cross section wherein a width (22) of the outlet (14) cross section measured in horizontal direction and perpendicular to the direction (3) of travel decreases from a first loading unit corresponding to a base layer (16) which is in contact with the conveyor belt (2) is wider than the width (22) of the outlet (14) cross section of the loading unit corresponding to a top layer (21),
- forming means (24) to bend the conveyor belt (2) around an axis parallel to the direction (3) of travel of the conveyor belt (2), the axis being positioned above a surface of the conveyor belt (2) which surface is in contact with the batch layers (16, 17, 18, 19, 20, 21, 29, 30, 31) so as to form a rod (25) with an approximately circular or oval cross section of the former flat layers (16, 17, 18, 19, 20, 21, 29, 30, 31), wherein the former base layer (16, 29) forms an outer sheath layer of the rod.

8. Device according to claim 7, **characterized in** compaction means (26) that apply pressure on the bent belt (2) in radial direction in order to compact the layers (16, 17, 18, 19, 20, 21, 29, 30, 31).

9. Batch (27) comprising multiple components for feeding into a glass melting furnace containing a glass melt which forms a top surface, **characterized in that** the batch (27) is formed as rod (25) with an approximately circular or oval cross section with at least two layers (16, 17, 18, 19, 20, 21, 29, 30, 31) being approximately concentric to each other.

10. Batch according to claim 9, **characterized in that** the batch (27) contains a layer (19) composed of sodium hydroxide.

11. Batch according to claim 9 or 10, **characterized in that** an outermost layer is composed of calcium oxide and an innermost layer is composed of coarse cullet.

12. Batch according to claim 11, **characterized in** at least one inner layer arranged between the outermost layer and the innermost layer, the layer being composed of sodium hydroxide, silicon dioxide, magnesium oxide or fine cullet.

13. Batch according to one of claims 9 to 12, **characterized in** six layers (16, 17, 18, 19, 20, 21) the first outer layer (16) being composed of calcium oxide, the second layer (17) being composed of magnesium oxide, the third layer (18) being composed of fine cullet, the fourth layer (19) being composed of sodium hydroxide, the fifth layer (20) being composed of silicon dioxide and the sixth inner layer (21) being composed of coarse cullet.

## Patentansprüche

1. Verfahren zur Vorbereitung eines aus mehreren Komponenten bestehenden Gemenges (27) zur Einspeisung in einen Glasschmelzofen, der eine Glasschmelze enthält, die ein umgebendes Volumen und eine obere Oberfläche bildet, **dadurch gekennzeichnet, dass** Komponenten des Gemenges (27) in mindestens zwei übereinander angeordneten Schichten (16, 17, 18, 19, 20, 21, 29, 30, 31) auf ein flexibles Förderband (2) geschüttet werden, wobei eine Basisschicht, die mit dem Förderband (2) in Kontakt ist, eine größere Breite (22), gemessen in horizontaler Richtung und senkrecht zur Laufrichtung (3) des Förderbandes (2), aufweist als eine oberste Schicht und wobei das Förderband (2) um eine Achse parallel zur Laufrichtung (3) des Förderbandes (2) gebogen wird, wobei die Achse oberhalb einer Oberfläche des Förderbandes (2) positioniert ist, wobei die Oberfläche in Kontakt mit den Schichten (16, 17, 18, 19, 20, 21, 29, 30, 31) des Gemenges (27) ist, um einen Stab (25) mit einem annähernd kreisförmigen oder ovalen Querschnitt der zuvor flachen Schichten (16, 17, 18, 19, 20, 21, 29, 30, 31) zu bilden, so dass die vorherige Basisschicht eine äußere Mantelschicht des Querschnitts des Stabes (25) bildet.

2. Verfahren nach Anspruch 1, **dadurch gekennzeichnet, dass** der annähernd zylindrische Stab (25) durch Druckbeaufschlagung in radialer Richtung auf das gebogene Förderband (2) zur Verdichtung der Schichten (16, 17, 18, 19, 20, 21, 29, 30, 31) verdichtet wird.

3. Verfahren nach Anspruch 1 oder 2, **dadurch gekennzeichnet, dass** eine erste Schicht (16) aus Kalziumoxid auf das Förderband (2) geschüttet wird und eine letzte Schicht aus groben Scherben auf das Förderband (2) geschüttet wird.

4. Verfahren nach einem der Ansprüche 1 bis 3, **dadurch gekennzeichnet, dass** eine Komponente des Gemenges (27) aus mindestens einer der Gruppen enthaltend
a. Natriumhydroxid
b. Siliziumdioxid
c. Kalziumoxid
d. Magnesiumoxid
e. Scherben, insbesondere grobe und/oder feine Scherben
ausgewählt wird.

5. Verfahren nach einem der Ansprüche 1 bis 4, **dadurch gekennzeichnet, dass** sechs Schichten (16, 17, 18, 19, 20, 21) gebildet werden, wobei die Basisschicht (16) Calciumoxid, die zweite Schicht (17) Magnesiumoxid, die dritte Schicht (18) feine Scherben, die vierte Schicht (19) Natriumhydroxid, die fünfte Schicht (20) Siliciumdioxid und die sechste Schicht (21) grobe Scherben sind.

6. Verfahren nach Anspruch 5, **dadurch gekennzeichnet, dass** die Breite (22) jeder Schicht (16, 17, 18, 19, 20, 21) beginnend mit der Basisschicht (16) bis zur obersten Schicht (21) abnimmt, wobei entlang einer Längsseite der Schichten (16, 17, 18, 19, 20, 21), in Laufrichtung (3) des Förderbandes (2) gesehen, Stufen (23) gebildet werden.

7. Vorrichtung (1) zum Vorbereiten eines Gemenges (27), das mehrere Komponenten umfasst, die in einen Glasschmelzofen eingebracht werden sollen, der eine Glasschmelze enthält, die eine obere Oberfläche bildet, wobei die Vorrichtung (1) **gekennzeichnet ist durch**
- ein flexibles Förderband (2) mit einer Laufrichtung (3),
- mindestens zwei Beschickungseinheiten (7), die über dem flexiblen Förderband (2) angeordnet sind, wobei jede Beschickungseinheit (7) eine Komponente des Gemenges (27) enthält und jede Beschickungseinheit (7) einen Auslass (14) aufweist, der zu einer oberen Oberfläche (15) des Förderbandes (2) führt, um jeweils eine Schicht (16, 17, 18, 19, 20, 21, 29, 30, 31) einer Komponente des Gemenges (27) auszuschütten, wobei die Schichten (16, 17, 18, 19, 20, 21, 29, 30, 31) übereinander angeordnet sind, wobei jede Schicht (16, 17, 18, 19, 20, 21, 29, 30, 31) einer Beschickungseinheit (7) zugeordnet ist, wobei die Auslässe (14) der Beschickungseinheiten (7) einen Auslassquerschnitt aufweisen, wobei eine in horizontaler Richtung und senkrecht zu der Laufrichtung (3) gemessene Breite (22) des Auslassquerschnitts abnimmt von einer ersten Beschickungseinheit, die der Basisschicht (16), die in Kontakt mit dem Förderband (2) ist, zugeordnet ist und breiter ist als die Breite (22) des Auslassquerschnitts der der obersten Schicht (21) zugeordneten Beschickungseinheit,
- Formgebungsmittel (24) zum Biegen des Förderbandes (2) um eine Achse parallel zur Laufrichtung (3) des Förderbandes (2), wobei die Achse oberhalb einer Oberfläche des Förderbandes (2) angeordnet ist, wobei die Oberfläche mit den Schichten (16, 17, 18, 19, 20, 21, 29, 30, 31) des Gemenges (27) in Kontakt steht, so dass ein Stab (25) mit einem annähernd kreisförmigen oder ovalen Querschnitt aus den zuvor flachen Schichten (16, 17, 18, 19, 20, 21, 29, 30, 31) gebildet wird, wobei die vorherige Basisschicht (16, 29) eine äußere Mantelschicht des Stabs (25) bildet.

8. Vorrichtung nach Anspruch 7, **gekennzeichnet durch** Verdichtungsmittel (26), die in radialer Richtung Druck auf das gebogene Förderband (2) ausüben, um die Schichten (16, 17, 18, 19, 20, 21, 29, 30, 31) zu verdichten.

9. Gemenge (27) aus mehreren Komponenten zur Zuführung in einen Glasschmelzofen, der eine eine obere Oberfläche bildende Glasschmelze enthält, **dadurch gekennzeichnet, dass** das Gemenge (27) als Stab (25) mit annähernd kreisförmigem oder ovalem Querschnitt und mit mindestens zwei Schichten ausgebildet ist, wobei die mindestens zwei Schichten (16, 17, 18, 19, 20, 21, 29, 30, 31) annähernd konzentrisch zueinander sind.

10. Gemenge nach Anspruch 9, **dadurch gekennzeichnet, dass** das Gemenge (27) eine Schicht (19) aus Natriumhydroxid enthält.

11. Gemenge nach Anspruch 9 oder 10, **dadurch gekennzeichnet, dass** eine äußerste Schicht aus Calciumoxid und eine innerste Schicht aus groben Scherben besteht.

12. Gemenge nach Anspruch 11, **gekennzeichnet durch** mindestens eine innere Schicht, die zwischen der äußersten Schicht und der innersten Schicht angeordnet ist, wobei die innere Schicht aus Natriumhydroxid, Siliziumdioxid, Magnesiumoxid oder feinen Scherben besteht.

13. Gemenge nach einem der Ansprüche 9 bis 12, **gekennzeichnet durch** sechs Schichten (16, 17, 18, 19, 20, 21), wobei die erste äußere Schicht (16) aus Calciumoxid, die zweite Schicht (17) aus Magnesiumoxid, die dritte Schicht (18) aus feinen Scherben, die vierte Schicht (19) aus Natriumhydroxid, die fünfte Schicht (20) aus Siliciumdioxid und die sechste innere Schicht (21) aus groben Scherben besteht.

## Revendications

1. Procédé de préparation d'un lot (27) comprenant de multiples composants destiné à être introduit dans un four de fusion de verre contenant un verre fondu qui forme un volume environnant et une surface supérieure, **caractérisé en ce que** les composants du lot (27) sont coulés sur une courroie transporteuse (2) souple en au moins deux couches (16, 17, 18, 19, 20, 21, 29, 30, 31) qui sont disposées l'une sur l'autre, dans lequel une couche de base qui est en contact avec la courroie transporteuse (2) présente une plus grande largeur (22) mesurée dans la direction horizontale et perpendiculaire à la direction (3) de déplacement de la courroie transporteuse (2) qu'une couche supérieure et dans lequel la courroie transporteuse (2) est courbée autour d'un axe parallèle à la direction (3) de déplacement de la courroie transporteuse (2), l'axe étant positionné au-dessus d'une surface de la courroie transporteuse (2), laquelle surface est en contact avec les couches (16, 17, 18, 19, 20, 21, 29, 30, 31) du lot (27) de manière à former une tige (25) avec une section transversale approximativement circulaire ou ovale des couches (16, 17, 18, 19, 20, 21, 29, 30, 31) formellement plates, dans lequel la couche de base précédente forme une couche de gaine externe de la section transversale de la tige (25).

2. Procédé selon la revendication 1, **caractérisé en ce que** la tige (25) sensiblement cylindrique est compactée par pression s'appliquant dans une direction radiale sur la courroie (2) courbée afin de compacter les couches (16, 17, 18, 19, 20, 21, 29, 30, 31).

3. Procédé selon la revendication 1 ou 2, **caractérisé en ce qu'**une première couche (16) se composant d'oxyde de calcium est coulée sur la courroie transporteuse (2) et une couche finale se composant de calcin grossier est coulée sur la courroie transporteuse (2).

4. Procédé selon l'une des revendications 1 à 3, **caractérisé en ce qu'**un composant du lot (27) est sélectionné parmi au moins l'un du groupe comprenant
a. l'hydroxyde de sodium
b. le dioxyde de silicium
c. l'oxyde de calcium
d. l'oxyde de magnésium
e. le calcin, en particulier le calcin grossier et/ou fin.

5. Procédé selon l'une des revendications 1 à 4, **caractérisé en ce que** six couches (16, 17, 18, 19, 20, 21) sont formées, la couche de base (16) étant de l'oxyde de calcium, la deuxième couche (17) étant de l'oxyde de magnésium, la troisième couche (18) étant du calcin fin, la quatrième couche (19) étant de l'hydroxyde de sodium, la cinquième couche (20) étant du dioxyde de silicium, la sixième couche (21) étant du calcin grossier.

6. Procédé selon la revendication 5, **caractérisé en ce que** la largeur (22) de chaque couche (16, 17, 18, 19, 20, 21) diminue en commençant avec la couche de base (16) jusqu'à la couche supérieure (21), des crans (23) étant formés le long d'un côté longitudinal des couches (16, 17, 18, 19, 20, 21) observées dans la direction (3) de déplacement de la courroie transporteuse (2).

7. Dispositif (1) de préparation d'un lot (27) comprenant de multiples composants destiné à être introduit dans un four de fusion de verre contenant un verre fondu qui forme une surface supérieure, le dispositif (1) étant **caractérisé par**
- une courroie transporteuse (2) souple ayant une direction (3) de déplacement,
- au moins deux unités de chargement (7) disposées au-dessus de la courroie transporteuse (2) souple, chaque unité de chargement (7) contenant un composant de lot (27) et chaque unité de chargement (7) présentant chacune une sortie (14) menant à une surface supérieure (15) de la courroie transporteuse (2) afin de couler une couche (16, 17, 18, 19, 20, 21, 29, 30, 31) d'un composant de lot (27), les couches (16, 17, 18, 19, 20, 21, 29, 30, 31) étant disposés les unes sur les autres, chaque couche (16, 17, 18, 19, 20, 21, 29, 30, 31) correspondant à une unité de chargement (7), les sorties (14) des unités de chargement (7) présentant une section transversale de sortie (14) dans laquelle une largeur (22) de la section transversale de sortie (14) mesurée dans la direction horizontale et perpendiculaire à la direction (3) de déplacement diminue à partir d'une première l'unité de chargement correspondant à une couche de base (16) qui est en contact avec la courroie transporteuse (2) est plus large que la largeur (22) de la section transversale de sortie (14) de l'unité de chargement correspondant à une couche supérieure (21),
- un moyen de formation (24) pour courber la courroie transporteuse (2) autour d'un axe parallèle à la direction (3) de déplacement de la courroie transporteuse (2), l'axe étant positionné au-dessus d'une surface de la courroie transporteuse (2), laquelle surface est en contact avec les couches (16, 17, 18, 19, 20, 21, 29, 30, 31) du lot de manière à former une tige (25) avec une section approximativement circulaire ou ovale des couches (16, 17, 18, 19, 20, 21, 29, 30, 31) plates précédentes, la couche de base (16, 29) précédente formant une couche de gaine externe de la tige.

8. Dispositif selon la revendication 7, **caractérisé par** un moyen de compactage (26) qui applique une pression sur la courroie (2) courbée dans une direction radiale afin de compacter les couches (16, 17, 18, 19, 20, 21, 29, 30, 31).

9. Lot (27) comprenant de multiples composants destiné à être introduit dans un four de fusion de verre contenant un verre fondu qui forme une surface supérieure, **caractérisé en ce que** le lot (27) est réalisé sous forme de tige (25) avec une section transversale approximativement circulaire ou ovale avec au moins deux couches (16, 17, 18, 19, 20, 21, 29, 30, 31) approximativement concentriques l'une par rapport à l'autre.

10. Lot selon la revendication 9, **caractérisé en ce que** le lot (27) contient une couche (19) se composant d'hydroxyde de sodium.

11. Lot selon la revendication 9 ou 10, **caractérisé en ce qu'**une couche la plus externe se compose d'oxyde de calcium et une couche la plus interne se compose de calcin grossier.

12. Lot selon la revendication 11, **caractérisé par** au moins une couche interne disposée entre la couche la plus externe et la couche la plus interne, la couche se composant d'hydroxyde de sodium, de dioxyde de silicium, d'oxyde de magnésium ou de calcin fin.

13. Lot selon l'une des revendications 9 à 12, **caractérisé par** six couches (16, 17, 18, 19, 20, 21), la première couche externe (16) se composant d'oxyde de calcium, la deuxième couche (17) se composant de magnésium oxyde, la troisième couche (18) se composant de calcin fin, la quatrième couche (19) se composant d'hydroxyde de sodium, la cinquième couche (20) se composant de dioxyde de silicium et la sixième couche interne (21) se composant de calcin grossier.
